(19)

**Europäisches Patentamt**
**European Patent Office**
**Office européen des brevets**

(11) **EP 4 441 530 B1**

(12) **EUROPEAN PATENT SPECIFICATION**

(45) Date of publication and mention
of the grant of the patent:
**08.04.2026 Bulletin 2026/15**

(21) Application number: **22932594.9**

(22) Date of filing: **22.03.2022**

(51) International Patent Classification (IPC):
$G01S\ 13/72^{(2006.01)}$   $G01S\ 13/42^{(2006.01)}$
$G01S\ 17/66^{(2006.01)}$   $G01S\ 13/89^{(2006.01)}$
$G01S\ 13/931^{(2020.01)}$   $G01S\ 17/931^{(2020.01)}$

(52) Cooperative Patent Classification (CPC):
**G01S 13/931; G01S 13/42; G01S 13/726;**
**G01S 13/89; G01S 17/66; G01S 17/931;**
G01S 2013/9323

(86) International application number:
**PCT/CN2022/082321**

(87) International publication number:
**WO 2023/178525 (28.09.2023 Gazette 2023/39)**

(54) **APPARATUS AND METHOD FOR TRACKING OF EXTENDED OBJECTS**

VORRICHTUNG UND VERFAHREN ZUR VERFOLGUNG VON ERWEITERTEN OBJEKTEN

APPAREIL ET PROCÉDÉ DE SUIVI D'OBJETS ÉTENDUS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**09.10.2024 Bulletin 2024/41**

(73) Proprietor: **Shenzhen Yinwang Intelligent**
**Technologies Co., Ltd.**
**Shenzhen City, Guangdong 518129 (CN)**

(72) Inventors:
• **BAUM, Marcus**
**37073 Göttingen (DE)**
• **THORMANN, Kolja**
**37073 Göttingen (DE)**

(74) Representative: **Gill Jennings & Every LLP**
**The Broadgate Tower**
**20 Primrose Street**
**London EC2A 2ES (GB)**

(56) References cited:
**WO-A1-2021/247427     CN-A- 112 991 389**
**US-A1- 2018 374 235     US-A1- 2020 117 947**
**US-A1- 2021 080 558     US-A1- 2021 254 982**
**US-B1- 6 239 740**

• **YANG SHISHAN ET AL: "Marginal Association**
**Probabilities for Multiple Extended Objects**
**without Enumeration of Measurement**
**Partitions", 2020 IEEE 23RD INTERNATIONAL**
**CONFERENCE ON INFORMATION FUSION**
**(FUSION), INTERNATIONAL SOCIETY OF**
**INFORMATION FUSION (ISIF), 6 July 2020**
**(2020-07-06), pages 1 - 8, XP033824751, DOI:**
**10.23919/FUSION45008.2020.9190500**
• **HE SHAOMING ET AL: "Multi-Sensor Multi-Target**
**Tracking Using Domain Knowledge and**
**Clustering", IEEE SENSORS JOURNAL, IEEE,**
**USA, vol. 18, no. 19, 1 October 2018 (2018-10-01),**
**pages 8074 - 8084, XP011690048, ISSN:**
**1530-437X, [retrieved on 20180911], DOI: 10.1109/**
**JSEN.2018.2863105**
• **HE SHAOMING ET AL: "Distributed Joint**
**Probabilistic Data Association Filter With Hybrid**
**Fusion Strategy", IEEE TRANSACTIONS ON**
**INSTRUMENTATION AND MEASUREMENT, IEEE,**
**USA, vol. 69, no. 1, 1 January 2020 (2020-01-01),**
**pages 286 - 300, XP011759292, ISSN: 0018-9456,**
**[retrieved on 20191209], DOI: 10.1109/**
**TIM.2019.2894048**

- YANG SHISHAN; WOLF LAURA M.; BAUM MARCUS: "Marginal Association Probabilities for Multiple Extended Objects without Enumeration of Measurement Partitions", 2020 IEEE 23RD INTERNATIONAL CONFERENCE ON INFORMATION FUSION (FUSION), INTERNATIONAL SOCIETY OF INFORMATION FUSION (ISIF), 6 July 2020 (2020-07-06), pages 1 - 8, XP033824751, DOI: 10.23919/ FUSION45008.2020.9190500

## Description

<u>TECHNICAL FIELD</u>

The present disclosure relates to sensing technology in general. More specifically, the disclosure relates to a sensing apparatus and method for tracking of extended objects, such as vehicles in a traffic situation.

<u>BACKGROUND</u>

Object or target tracking denotes the process of successively determining the number and motion states of multiple objects based on sensor measurements, usually Radar or Lidar measurements. Tracking is a key technology in many areas such as robotics, surveillance, autonomous driving. automation, sensor networks and the like.

It is becoming increasingly common that objects occupy several sensor resolution cells due to the rapid advances in sensor technologies and/or because objects are tracked in the near-field of sensors, e.g. in mobile robotics and autonomous driving. The tracking of objects that might occupy more than one sensor cell is known as extended object tracking. In extended object tracking the objects give rise to a varying number of potentially noisy sensor measurements from different spatially distributed measurement sources, also referred to as reflection points. The shape of the object may be unknown and can even vary over time.

For target tracking using point clouds, it is important to consider all association possibilities, including all possibilities whether targets exist or not. For extended targets, this becomes more difficult as a target can generate multiple measurements. However, considering all possibilities becomes infeasible for an increasing number of targets and measurements.

Yang Shishan et al (Marginal Association Probabilities for Multiple Extended Objects without Enumeration of Measurement Partitions", 2020 IEEE 23RD INTERNATIONAL CONFERENCE ON D1 INFORMATION FUSION (FUSION), 6 July 2020, pages 1-8, XP033824751) discloses a data association method for multiple extended object tracking, wherein marginal association probabilities are calculated for individual measurements and a sequential measurement update is performed. WO 2021/247427 A1 discloses techniques for improving clustering of points, or targets, detected by an automotive imaging radar. He Shaoming et al ("Multi-Sensor Multi-Target Tracking Using Domain Knowledge and Clustering", IEEE SENSORS JOURNAL, IEEE, vol. 18, no. 19, 1 October 2018, pages 8074-8084, XP011690048) discloses a multi-target tracking and track maintenance algorithm used over a sensor network, wherein each sensor runs a local joint probabilistic data association filter using only its own measurements. US 6239740 B1 discloses an algorithm for evaluating the weighted bipartite graph of associations between two sets of data with gaussian error.

<u>SUMMARY</u>

It is an object to provide an improved apparatus and method for tracking of extended objects.

The foregoing and other objects are achieved by the subject matter of the independent claims. Further implementation forms are apparent from the dependent claims, the description and the figures.

According to a first aspect an apparatus for tracking one or more extended objects is provided. The apparatus comprises at least one sensor configured to perform a plurality of measurements of the one or more extended objects for obtaining a point cloud of measurement points. Furthermore, the apparatus comprises a processing circuitry configured to determine for each measurement point of the point cloud and each object of the one or more extended objects a respective marginal association probability, MAP, value of the respective measurement point for being associated with the respective object. The processing circuitry is further configured to define for each object of the one or more objects a respective subset of the point cloud of measurement points based on the plurality of MAP values and assign one or more measurement points of the subset of the point cloud to the respective object of the one or more extended objects.

The apparatus according to the first aspect is configured to use MAPs first for the tracking of the individual objects and then apply grouping based on the MAPs. This may lead to a combination of MAPs and a grouping algorithm for adaptive birth. For classification, MAPs and grouping are combined in such a way that MAPs are used to exclude measurement before the grouping but also to combine groups. By combining MAPs and grouping the apparatus according to the first aspect allows correct tracking even of closely spaced targets.

In the first aspect, the processing circuitry is configured to define for each object the subset of the point cloud of measurement points based on the plurality of MAPs by excluding those measurement points of the point cloud having at least one MAP value for being associated with a different object that is larger than a first MAP threshold value.

In the first aspect, the processing circuitry is configured to assign the one or more measurement points of the subset of the point cloud to the respective object of the one or more extended objects based on a density-based spatial clustering algorithm to form measurement groups and then assign a group to an object if the group contains at least one measurement with a MAP value for being associated with the object that is larger than the first MAP threshold value. For instance, the circuitry is configured to assign the one or more measurement points of the subset of the point cloud to the respective object of the one or more extended objects based on the known DBSCAN algorithm.

In a further possible implementation form, the processing circuitry is further configured to classify the one or more extended objects based on the assignment of the one or more measurement point of the subset of the point cloud to the respective object of the one or more extended objects.

In a further possible implementation form, the processing circuitry is configured to, prior to determining the plurality of MAP values, gate the plurality of measurement points of the point cloud.

In a further possible implementation form, the processing circuitry is further configured to assign one or more further measurement points of the subset of the point cloud of measurement points to one or more new extended objects by excluding those measurement points of the point cloud having at least one MAP value for being associated with at least one of the one or more objects that is larger than a second MAP threshold value.

In a further possible implementation form, the first MAP threshold value is equal to the second MAP threshold value.

In a further possible implementation form, the at least one sensor comprises a Radar sensor and/or a LiDAR sensor.

According to a second aspect an advanced driver assistance system, ADAS, for a vehicle is provided, wherein the ADAS comprises an apparatus according to the first aspect.

According to a third aspect, a vehicle is provided comprising an apparatus according to the first aspect and/or an advanced driver assistance system, ADAS, according to the second aspect.

According to a fourth aspect a method for tracking one or more extended objects is provided. The method comprises:

performing a plurality of measurements of the one or more extended objects for obtaining a point cloud of measurement points;

determining for each measurement point of the point cloud and each object of the one or more extended objects a respective marginal association probability, MAP, value of the respective measurement point for being associated with the respective object;

defining for each object of the one or more objects a respective subset of the point cloud of measurement points based on the plurality of MAP values by excluding those measurement points of the point cloud having at least one MAP value for being associated with a different object that is larger than a first MAP threshold value; and

assigning one or more measurement points of the subset of the point cloud to the respective object of the one or more extended objects based on a density-based spatial clustering algorithm to form measurement groups and then assign a group to an object if the group contains at least one measurement with a MAP value for being associated with the object that is larger than the first MAP threshold value.

The method according to the fourth aspect of the present disclosure can be performed by the apparatus according to the first aspect of the present disclosure. Thus, further features of the method according to the fourth aspect of the present disclosure result directly from the functionality of the apparatus according to the first aspect of the present disclosure as well as its different implementation forms described above and below.

According to a fifth example aspect, a computer program product is provided, comprising a computer-readable storage medium for storing program code which causes a computer or a processor to perform the method according to the fourth aspect, when the program code is executed by the computer or the processor.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Fig. 1 is a schematic diagram illustrating a sensing apparatus according to an embodiment for tracking of extended objects;

Fig. 2 is a diagram illustrating different processing stages implemented by a sensing apparatus according to an embodiment for tracking of extended objects;

Figs. 3a-3c show schematic diagrams illustrating different tracking scenarios for a sensing apparatus according to an embodiment;

Fig. 4 shows a schematic diagram of an advanced driver assistance system according to an embodiment comprising a sensing apparatus according to an embodiment;

Fig. 5 shows a top view of a vehicle according to an embodiment comprising an advanced driver assistance system according to an embodiment; and

Fig. 6 shows a flow diagram illustrating steps of a method of tracking extended objects according to an embodiment.

In the following identical reference signs refer to identical or at least functionally equivalent features.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

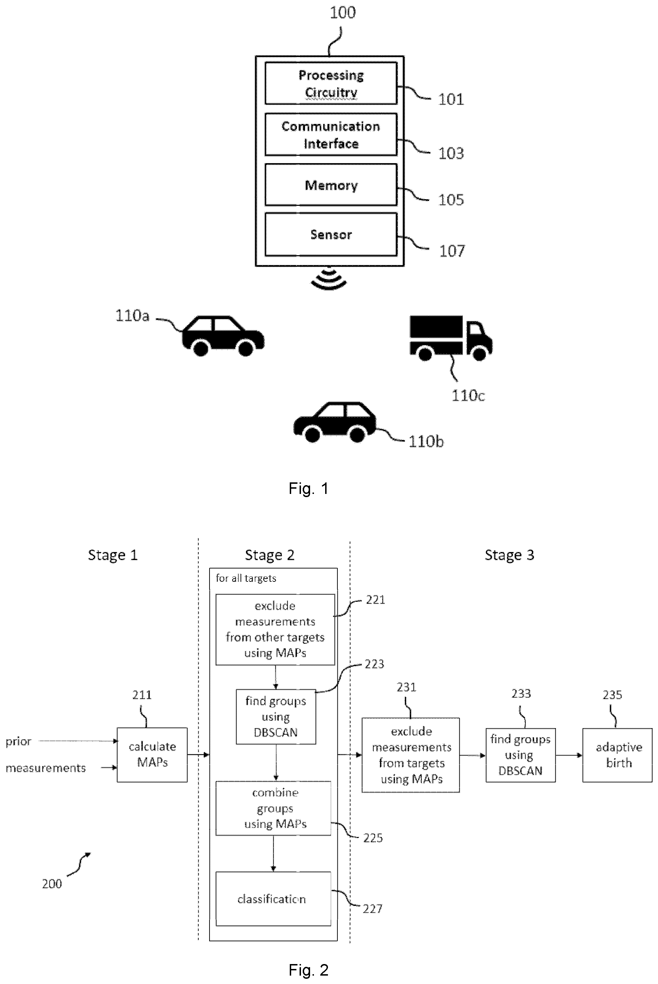

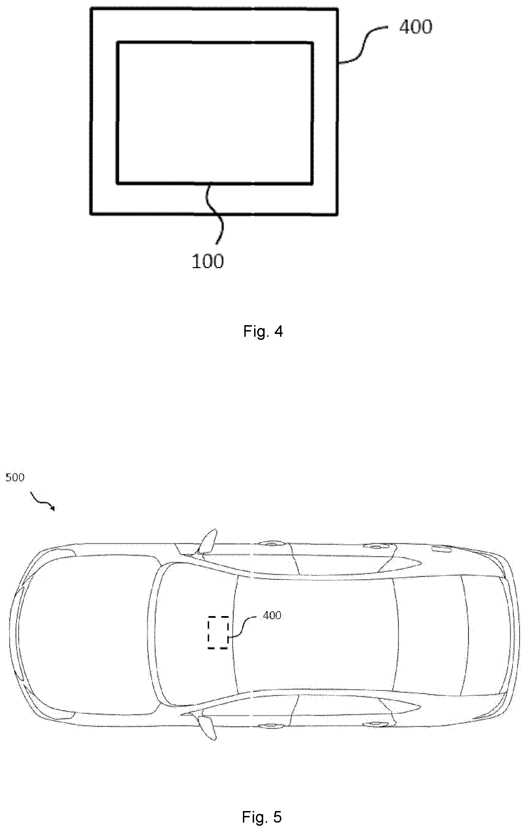

Figure 1 is a schematic diagram illustrating a sensing apparatus 100 according to an embodiment. As will be described in more detail below, the sensing apparatus 100 may be part of an advanced driver assistance system 400 (shown in figure 4) and/or of a vehicle 500 (shown in figure 5).

The sensing apparatus 100 is configured to track one or more extended objects 110a-c, such as vehicles 110a-c. To this end, as illustrated in figure 1, the apparatus 100 comprises at least one sensor 107 configured to obtain a plurality of distance and/or direction measurements of the one or more extended objects for obtaining a point cloud of measurement points, e.g. a set of 3D measurement points in Euclidean space. In an embodiment, the at least one sensor 107 may comprise a Radar sensor 107 and/or a Lidar sensor 107.

The sensing apparatus 100 further comprises a processing circuitry 101 configured to process the measurement data provided by the at least one sensor 107 for tracking the extended objects 110a-c, as will be described in more detail below. The processing circuitry 140 of the sensor apparatus 100 may be implemented in hardware and/or software and may comprise digital circuitry, or both analog and digital circuitry. Digital circuitry may comprise components such as application-specific integrated circuits (ASICs), field-programmable arrays (FPGAs), digital signal processors (DSPs), or general-purpose processors. As illustrated in figure 1, the sensing apparatus 100 may further comprise a communication interface 103 for exchanging data (such as with an ADAS 400) and a memory 105. In an embodiment, the memory 105 may be configured to store executable program code which, when executed by the processing circuitry 101, causes the sensing apparatus 100 to perform the functions and operations described herein.

As will be described in more detail in the following, the processing circuitry 101 of the sensing apparatus 100 is configured to determine for each measurement point of the point cloud provided by the sensor 107 and each object of the one or more extended objects 110a-c a respective marginal association probability, MAP, value of the respective measurement point for being associated with the respective object. The processing circuitry 101 is further configured to define for each object of the one or more objects 110a-c a respective subset of the point cloud of measurement points based on the plurality of MAP values and assign one or more measurement points of the subset of the point cloud to the respective object of the one or more extended objects.

The sensing apparatus 100 according to an embodiment is configured to use MAPs first and then apply grouping based on the MAPs. This may lead to a combination of MAPs and a grouping algorithm for adaptive birth. For classification, MAPs and grouping are combined in such a way that MAPs are used to exclude measurement before the grouping but also to combine groups. By combining MAPs and grouping the sensing apparatus 100 according to an embodiment allows correct tracking even of closely spaced targets.

Thus, as will be appreciated, the sensing apparatus 100 implements the basic idea to use the MAPs in combination with a grouping algorithm. In an embodiment, the MAPs consider all possible associations during tracking while the grouping of measurements provides hard assignments which can be used for classification and birth. A grouping algorithm may be used on all measurements with low MAPs to existing targets to find measurement groups to initialize new targets. Meanwhile, for classification it may be beneficial to consider the possibility of a target getting bigger (e.g. the front of a truck was visible and classified as a car due to its size; when more of the truck becomes visible due to a change in sensor perspective, this change should be considered). To this end, in an embodiment, the measurements may be grouped for each target, excluding measurements with high MAPs to other targets and combining groups which include measurements with high MAPs to the currently processed target.

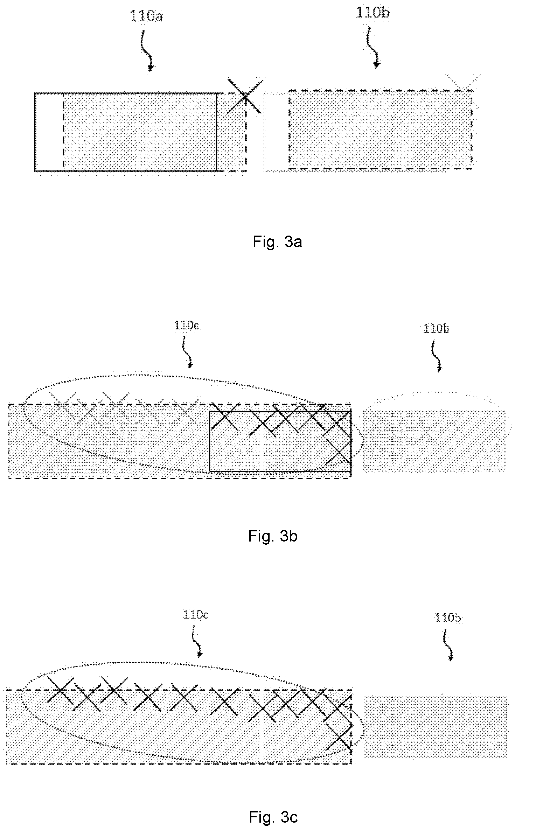

Further embodiments of the sensing apparatus 100 will be described in the following under further reference to figure 2 and figures 3a-c.

Figure 2 is a diagram illustrating different processing stages implemented by the sensing apparatus 100 according to an embodiment for tracking of extended objects 110a-c. The different processing stages comprise three main stages, including a first stage of calculating the MAPs (processing block 211), a second stage of using the MAPs and a grouping algorithm (such as the DBSCAN grouping algorithm) for classification (processing blocks 221 to 227), and a third stage of using the MAPs and a grouping algorithm for adaptive birth (processing blocks 231 to 235).

More specifically, in the first stage processing block 211 implemented by the processing circuitry 101 of the sensing apparatus 100 the MAPs may be calculated by considering all possible associations between measurements and targets 110a-c, incorporating the possibility of clutter detections, missed targets, and measurement rate and existence probability of targets. Unlike with likelihoods, according to an embodiment a detection/measurement in between two targets 110a-c may be weighted less for one target if the other would get too few measurements associated to it (an illustrative example is shown in figure 3a).

In the second stage illustrated in figure 2 each object, i.e. target individually. In an embodiment, all measurements with high MAPs to other targets may be excluded, e.g. having a MAP larger than a first MAP threshold value (processing block 221). As measurements belonging to the currently processed target might have low MAPs with respect to the currently processed target due to a misclassification (resulting from, e.g., occlusion), grouping is applied to all remaining measurements, using for instance the DBSCAN algorithm (processing block 223). Then, all groups which include high MAPs to the currently processed target are combined by processing block 225 (an illustrative example is shown in figure 3b) and may be classified (processing block 227), for instance, as a car, a truck, a pedestrian and the like.

In the third stage illustrated in figure 2 concerning the optional adaptive birth the MAPs are used to exclude all measurements with high MAPs to targets, e.g. having a MAP larger than a second MAP threshold value (processing block 221). In an embodiment, the first and second MAP threshold value may be equal. Thereafter, the remaining measurements are grouped using, for instance, the DBSCAN grouping algorithm (processing block 233) and each group is used as a possible new target (processing block 235). An illustrative example is shown in figure 3c.

Figures 3a-3c show schematic diagrams illustrating different tracking scenarios for a sensing apparatus according to an embodiment.

Figure 3a show schematically two physical objects, such as cars 110a and 110b, as dashed rectangles filled with grey, two estimates for the objects in black and grey, and a black and a grey measurement (marked as crosses). While the likelihood of the black measurement would be equal to both estimates, the MAP is higher with respect to the black estimate as it considers that the grey estimate has another good measurement, namely the grey one, while the black estimate has no other fitting measurement.

Figure 3b illustrates the classification process implemented by the apparatus 100 according to an embodiment for an exemplary scenario. The black target 110c is misclassified as a car. The conventional DBSCAN algorithm would normally combine all measurements into a group, but the MAPs determined by embodiments disclosed herein allow the exclusion of the grey measurements as they belong to the grey target 110b. By using, for instance, the DBSCAN algorithm on the remaining measurements, as implemented by embodiments disclosed herein, a cluster is obtained that contains the black measurements as well as the additional dark grey measurements belonging to the truck 110c. The classification may then be updated based on this result.

Figure 3c illustrates the adaptive birth process implemented by the apparatus 100 according to an embodiment. The conventional DBSCAN algorithm would normally combine all measurements into a group, but according to embodiments disclosed herein the MAPs allow the exclusion of the grey measurements as they belong to the grey target 110b. By using, for instance, the DBSCAN algorithm on the remaining measurements, as implemented by embodiments disclosed herein, a cluster may be obtained that contains all measurements belonging to the truck 110c, which can then be used for the adaptive birth process.

In an embodiment, the processing circuitry 101 of the sensing apparatus 100 is configured to determine the MAPs based on the following mathematical background (further details are provided by the paper Shishan Yang et al "Marginal Association Probabilities for Multiple Extended Objects without Enumeration of Measurement Partitions", IEEE 23rd International Conference on Information Fusion (FUSION), 2022,

In an embodiment, determining the MAPs is based on calculating the probability of target i being associated with measurement j considering all other association combinations between the remaining targets and measurements. The likelihood of this association may be defined as $l_{ji}$. It may be further assumed that a target has a detection probability $P_D$ and existence probability $P_E^i$. Moreover, it is assumed that the number of measurements generated by a target in a single time step is Poisson distributed with rate $A_i$.

Given M measurements and *N* targets, an association event is defined as $\theta = \{\theta_1, ..., \theta_M\}$ with $0 \le \theta_j \le N,$ associating each measurement either to a target or to clutter (marked as target ID 0). If a target is associated to no measurements, it is either non-existent, undetected, or the number of measurements generated by the Poisson distribution is 0. To differentiate the former two from the latter case, U may be defined as the set of targets which are undetected or non-existent. Therefore, the **probability** of association event $\theta$ and a compatible U (compatible means *(i E $\theta$ $\Rightarrow i \notin U$) $\wedge$ (i E U $\Rightarrow i \notin \theta$)* Vi $\in$ *N* and *N* = {1, ... ,*N}*) is defined as the product of the likelihoods of the involved associations as well as corresponding **probabilities** of targets producing measurements or not, i.e.

$$P(\boldsymbol{\theta}, \boldsymbol{U}) = \frac{1}{M!} \Pi_{i \in \mathbf{U}}\left(1 - P_D P_E^i\right)\left(\Pi_{i \in N \setminus U} P_D P_E^i e^{-\lambda_i} \Pi_{j : \theta_j = i} \lambda_i l_{ji}\right).$$

The MAP between target *i* and measurement *j* may be calculated by the processing circuitry 101 of the sensing apparatus 100 as the sum of all combinations of association events $\theta$ and compatible undetected target sets U which contain $\theta_j = i,$ i.e.,

$$P(\theta_j = i) = \lambda_i l_{ji} \Sigma_{\boldsymbol{U} \in \mathcal{P}(\boldsymbol{N} \setminus i)} \Sigma_{\boldsymbol{\theta}' \in \Theta_{N \setminus U}^{M \setminus j}} P(\boldsymbol{\theta}', \boldsymbol{U}),$$

with $\boldsymbol{\Theta}_N^M$ denoting the set of all association events between targets N and measurements M and $\mathcal{P}(N)$ denoting the set of all subsets of *N.*

In alternative embodiments, a grouping algorithm other than the DBSCAN may be used. For instance, if the number of new targets per time step is known, an algorithm like k-means may be used.

In a further embodiment, the processing circuitry 101 may be configured to approximate the MAPs using stochastic methods like Stochastic Optimization (SO), which could decrease computation time. Likelihoods could be used to approximate the MAPs as well.

Figure 4 shows a schematic diagram of an advanced driver assistance system, ADAS, 400 according to an embodiment comprising the sensing apparatus 100 according to an embodiment.

Figure 5 shows a top view of a vehicle, in particular a car 500 according to an embodiment comprising the advanced driver assistance system 400 according to an embodiment.

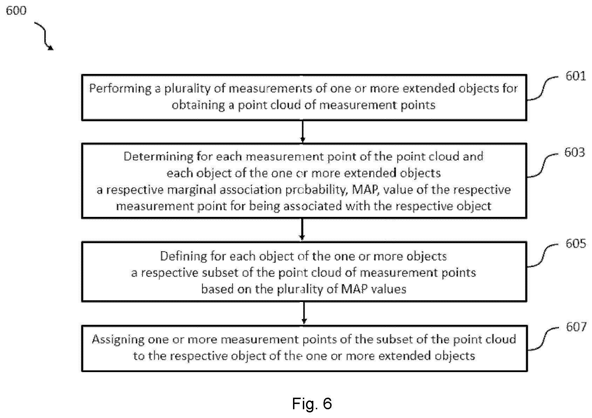

Figure 6 shows a flow diagram illustrating a method 600 for tracking one or more extended objects 110a-c. The method 600 comprises a step 601 of performing a plurality of distance and/or direction measurements of the one or more extended objects 110a-c for obtaining a point cloud of measurement points. The method 600 further comprises a step 603 of determining for each measurement point of the point cloud and each object of the one or more extended objects 110a-c a respective marginal association probability, MAP, value of the respective measurement point for being associated with the respective object. Moreover, the method 600 comprises a step 605 of defining for each object of the one or more objects a respective subset of the point cloud of measurement points based on the plurality of MAP values. The method 600 further comprises a step 607 of assigning one or more measurement points of the subset of the point cloud to the respective object of the one or more extended objects 110a-c.

The person skilled in the art will understand that the "blocks" ("units") of the various figures (method and apparatus) represent or describe functionalities of embodiments (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments may be integrated into one processing unit, or each of the units may exist alone physically, or two or more units are integrated into one unit.

**Claims**

1. An apparatus (100) for tracking one or more extended objects (110a-c), wherein the apparatus (100) comprises:

   at least one sensor (107) configured to perform a plurality of measurements of the one or more extended objects for obtaining a point cloud of measurement points; and
   a processing circuitry (101) configured to:

   determine for each measurement point of the point cloud and each object of the one or more extended objects (110a-c) a respective marginal association probability, MAP, value of the respective measurement point for being associated with the respective object;
   **characterised in that**, the processing circuitry (101) is further configured to:

   define for each object of the one or more objects (110a-c) a respective subset of the point cloud of measurement points based on the plurality of MAP values by excluding those measurement points of the point cloud having at least one MAP value for being associated with a different object that is larger than a first MAP threshold value; and
   assign one or more measurement points of the subset of the point cloud to the respective object of the one or more extended objects (110a-c) based on a density-based spatial clustering algorithm to form measurement groups and then assign a group to an object if the group contains at least one measurement with a MAP value for being associated with the object that is larger than the first MAP threshold value.

2. The apparatus (100) of claim 1, wherein the processing circuitry (101) is further configured to classify the one or more extended objects (110a-c) based on the assignment of the one or more measurement points of the subset of the point cloud to the respective object of the one or more extended objects (110a-c).

3. The apparatus (100) of any one of the preceding claims, wherein the processing circuitry (101) is further configured to assign one or more further measurement points of the subset of the point cloud of measurement points to one or more new extended objects by excluding those measurement points of the point cloud having at least one MAP value for being associated with at least one of the one or more objects (110a-c) that is larger than a second MAP threshold value.

4. The apparatus (100) of claim 3, wherein the first MAP threshold value is equal to the second MAP threshold value.

5. The apparatus (100) of any one of the preceding claims, wherein the at least one sensor (107) comprises a Radar sensor or a LiDAR sensor.

6. An advanced driver assistance system, ADAS, (400) for a vehicle (500), wherein the ADAS (400) comprises the apparatus (100) according to any one of the preceding claims.

7. A vehicle (500) comprising the apparatus (100) according to any one of claims 1 to 5 or the advanced driver assistance system, ADAS, (400) according to claim 6.

8. A method (600) for tracking one or more extended objects (110a-c), wherein the method (600) comprises:

   performing (601) a plurality of measurements of the one or more extended objects (110a-c) for obtaining a point cloud of measurement points;
   determining (603) for each measurement point of the point cloud and each object of the one or more extended objects (110a-c) a respective marginal association probability, MAP, value of the respective measurement point for being associated with the respective object;
   **characterised in that**, defining (605) for each object of the one or more objects (110a-c) a respective subset of the point cloud of measurement points based on the plurality of MAP values by excluding those measurement points of the point cloud having at least one MAP value for being associated with a different object that is larger than a first MAP threshold value; and

assigning (607) one or more measurement points of the subset of the point cloud to the respective object of the one or more extended objects (110a-c) based on a density-based spatial clustering algorithm to form measurement groups and then assign a group to an object if the group contains at least one measurement with a MAP value for being associated with the object that is larger than the first MAP threshold value.

## Patentansprüche

1. Vorrichtung (100) zum Verfolgen eines oder mehrerer ausgedehnter Objekte (110a-c), wobei die Vorrichtung (100) Folgendes umfasst:

   mindestens einen Sensor (107), der konfiguriert ist, um zum Erlangen einer Punktwolke von Messpunkten eine Vielzahl von Messungen an einem oder mehreren ausgedehnten Objekten durchzuführen; und eine Verarbeitungsschaltung (101), die konfiguriert ist, um:

   für jeden Messpunkt der Punktwolke und jedes Objekt des einen oder der mehreren ausgedehnten Objekte (110a-c) einen jeweiligen marginalen Zuordnungswahrscheinlichkeits-(MAP-)Wert des jeweiligen Messpunkts zu bestimmen, um dem jeweiligen Objekt zugeordnet zu werden;
   **dadurch gekennzeichnet, dass** die Verarbeitungsschaltung (101) ferner konfiguriert ist, um:

   durch Ausschließen derjenigen Messpunkte der Punktwolke, die mindestens einen MAP-Wert aufweisen, um einem anderen Objekt zugeordnet zu werden, der größer als ein erster MAP-Schwellenwert ist, für jedes Objekt des einen oder der mehreren Objekte (110a-c) eine jeweilige Teilmenge der Punktwolke von Messpunkten basierend auf der Vielzahl von MAP-Werten zu definieren; und basierend auf einem dichtebasierten räumlichen Cluster-Algorithmus dem jeweiligen Objekt des einen oder der mehreren erweiterten Objekte (110a-c) einen oder mehrere Messpunkte der Teilmenge der Punktwolke zuzuteilen, um Messgruppen zu bilden und dann einem Objekt eine Gruppe zuzuteilen, wenn die Gruppe mindestens eine Messung mit einem MAP-Wert enthält, um dem Objekt zugeordnet zu werden, der größer als der erste MAP-Schwellenwert ist.

2. Vorrichtung (100) nach Anspruch 1, wobei die Verarbeitungsschaltung (101) ferner konfiguriert ist, um das eine oder die mehreren ausgedehnten Objekte (110a-c) basierend auf der Zuteilung des einen oder mehreren Messpunkte der Teilmenge der Punktwolke zu dem jeweiligen Objekt des einen oder der mehreren ausgedehnten Objekte (110a-c) zu klassifizieren.

3. Vorrichtung (100) nach einem der vorhergehenden Ansprüche, wobei die Verarbeitungsschaltung (101) ferner konfiguriert ist, um durch Ausschließen derjenigen Messpunkte der Punktwolke, die mindestens einen MAP-Wert aufweisen, um mindestens einem der einen oder mehreren Objekte (110a-c) zugeordnet zu werden, der größer als ein zweiter MAP-Schwellenwert ist, einem oder mehreren neuen ausgedehnten Objekten einen oder mehrere weitere Messpunkte der Teilmenge der Punktwolke von Messpunkten zuzuteilen.

4. Vorrichtung (100) nach Anspruch 3, wobei der erste MAP-Schwellenwert gleich dem zweiten MAP-Schwellenwert ist.

5. Vorrichtung (100) nach einem der vorhergehenden Ansprüche, wobei der mindestens eine Sensor (107) einen Radarsensor oder einen LiDAR-Sensor umfasst.

6. Fortgeschrittenes Fahrerassistenzsystem (ADAS) (400) für ein Fahrzeug (500), wobei das ADAS (400) die Vorrichtung (100) nach einem der vorhergehenden Ansprüche umfasst.

7. Fahrzeug (500), umfassend die Vorrichtung (100) nach einem der Ansprüche 1 bis 5 oder das fortgeschrittene Fahrerassistenzsystem (ADAS) (400) nach Anspruch 6.

8. Verfahren (600) zum Verfolgen eines oder mehrerer ausgedehnter Objekte (110a-c), wobei das Verfahren (600) Folgendes umfasst:

   Durchführen (601) einer Vielzahl von Messungen des einen oder der mehreren ausgedehnten Objekten (110a-c) zum Erlangen einer Punktwolke von Messpunkten;
   Bestimmen (603) eines jeweiligen marginalen Zuordnungswahrscheinlichkeits-(MAP-)Werts des jeweiligen Messpunkts, um dem jeweiligen Objekt zugeordnet zu werden, für jeden Messpunkt der Punktwolke und jedes Objekt des einen oder der mehreren ausgedehnten Objekte (110a-c);

**gekennzeichnet durch**

Definieren (605) einer jeweiligen Teilmenge der Punktwolke von Messpunkten basierend auf der Vielzahl von MAP-Werten für jedes Objekt des einen oder der mehreren Objekte (110a-c) durch Ausschließen derjenigen Messpunkte der Punktwolke, die mindestens einen MAP-Wert aufweisen, um einem anderen Objekt zugeordnet zu werden, der größer als ein erster MAP-Schwellenwert ist; und

Zuteilen (607) eines oder mehrerer Messpunkte der Teilmenge der Punktwolke zu dem jeweiligen Objekt des einen oder der mehreren erweiterten Objekte (110a-c) basierend auf einem dichtebasierten räumlichen Cluster-Algorithmus, um Messgruppen zu bilden und dann einem Objekt eine Gruppe zuzuteilen, wenn die Gruppe mindestens eine Messung mit einem MAP-Wert enthält, um dem Objekt zugeordnet zu werden, der größer als der erste MAP-Schwellenwert ist.

**Revendications**

1. Appareil (100) pour le suivi d'un ou plusieurs objets étendus (110a-c), dans lequel l'appareil (100) comprend :

   au moins un capteur (107) configuré pour réaliser une pluralité de mesures des un ou plusieurs objets étendus afin d'obtenir un nuage de points de points de mesure ; et
   un ensemble de circuits de traitement (101) configuré pour :

      déterminer pour chaque point de mesure du nuage de points et chaque objet des un ou plusieurs objets étendus (110a-c) une valeur de probabilité d'association marginale respective, MAP, du point de mesure respectif d'être associé à l'objet respectif ;
      **caractérisé en ce que** l'ensemble de circuits de traitement (101) est également configuré pour :

         définir pour chaque objet des un ou plusieurs objets (110a-c) un sous-ensemble respectif du nuage de points de points de mesure en fonction de la pluralité des valeurs de MAP en excluant les points de mesure du nuage de points ayant au moins une valeur de MAP d'être associés à un objet différent qui est supérieure à une première valeur seuil de MAP ; et
         attribuer un ou plusieurs points de mesure du sous-ensemble du nuage de points à l'objet respectif des un ou plusieurs objets étendus (110a-c) en fonction d'un algorithme de regroupement spatial basé sur la densité pour former des groupes de mesures, puis attribuer un groupe à un objet si le groupe contient au moins une mesure avec une valeur de MAP d'être associé à l'objet qui est supérieure à la première valeur de seuil de MAP.

2. Appareil (100) selon la revendication 1, dans lequel l'ensemble de circuits de traitement (101) est également configuré pour classer les un ou plusieurs objets étendus (110a-c) en fonction de l'attribution des un ou plusieurs points de mesure du sous-ensemble du nuage de points à l'objet respectif des un ou plusieurs objets étendus (110a-c).

3. Appareil (100) selon l'une quelconque des revendications précédentes, dans lequel l'ensemble de circuits de traitement (101) est également configuré pour attribuer un ou plusieurs points de mesure supplémentaires du sous-ensemble du nuage de points de points de mesure à un ou plusieurs nouveaux objets étendus en excluant les points de mesure du nuage de points ayant au moins une valeur de MAP d'être associés à au moins l'un des un ou plusieurs objets (110a-c) qui est supérieure à une seconde valeur seuil de MAP.

4. Appareil (100) selon la revendication 3, dans lequel la première valeur seuil de MAP est égale à la seconde valeur seuil de MAP.

5. Appareil (100) selon l'une quelconque des revendications précédentes, dans lequel l'au moins un capteur (107) comprend un capteur radar ou un capteur LiDAR.

6. Système avancé d'aide au conducteur, ADAS, (400) pour un véhicule (500), dans lequel l'ADAS (400) comprend l'appareil (100) selon l'une quelconque des revendications précédentes.

7. Véhicule (500) comprenant l'appareil (100) selon l'une quelconque des revendications 1 à 5 ou le système avancé d'aide au conducteur, ADAS, (400) selon la revendication 6.

8. Procédé (600) de suivi d'un ou plusieurs objets étendus (110a-c), dans lequel le procédé (600) comprend :

la réalisation (601) d'une pluralité de mesures des un ou plusieurs objets étendus (110a-c) pour obtenir un nuage de points de points de mesure ;

la détermination (603) pour chaque point de mesure du nuage de points et chaque objet des un ou plusieurs objets étendus (110a-c) d'une valeur de probabilité d'association marginale respective, MAP, du point de mesure respectif d'être associé à l'objet respectif ;

**caractérisé en ce que**,

la définition (605) pour chaque objet des un ou plusieurs objets (110a-c) d'un sous-ensemble respectif du nuage de points de points de mesure en fonction de la pluralité des valeurs de MAP en excluant les points de mesure du nuage de points ayant au moins une valeur de MAP d'être associés à un objet différent qui est supérieure à une première valeur seuil de MAP ; et

l'attribution (607) d'un ou plusieurs points de mesure du sous-ensemble du nuage de points à l'objet respectif des un ou plusieurs objets étendus (110a-c) en fonction d'un algorithme de regroupement spatial basé sur la densité pour former des groupes de mesures, puis l'attribution d'un groupe à un objet si le groupe contient au moins une mesure avec une valeur de MAP d'être associé à l'objet qui est supérieure à la première valeur de seuil de MAP.

100

Processing
Circuitry —— 101

Communication
Interface —— 103

Memory —— 105

Sensor —— 107

110a

110c

110b

Fig. 1

Stage 1                Stage 2                      Stage 3

for all targets

exclude
measurements
from other targets       —— 221
using MAPs

211                     find groups
using            —— 223
DBSCAN

prior —————→   calculate
MAPs          →                        231              233              235
measurements ——→                                   exclude         find groups
combine                  measurements     using         adaptive
groups                   from targets  →  DBSCAN   →    birth
using MAPs               using MAPs
—— 225

200                     classification
—— 227

Fig. 2

110a     110b

Fig. 3a

110c     110b

Fig. 3b

110c     110b

Fig. 3c

400

100

Fig. 4

500

400

Fig. 5

600

Performing a plurality of measurements of one or more extended objects for obtaining a point cloud of measurement points — 601

Determining for each measurement point of the point cloud and each object of the one or more extended objects a respective marginal association probability, MAP, value of the respective measurement point for being associated with the respective object — 603

Defining for each object of the one or more objects a respective subset of the point cloud of measurement points based on the plurality of MAP values — 605

Assigning one or more measurement points of the subset of the point cloud to the respective object of the one or more extended objects — 607

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021247427 A1

- US 6239740 B1

**Non-patent literature cited in the description**

- **YANG SHISHAN et al.** Marginal Association Probabilities for Multiple Extended Objects without Enumeration of Measurement Partitions. *2020 IEEE 23RD INTERNATIONAL CONFERENCE ON D1 INFORMATION FUSION (FUSION)*, 06 July 2020, 1-8

- Multi-Sensor Multi-Target Tracking Using Domain Knowledge and Clustering. **HE SHAOMING et al.** IEEE SENSORS JOURNAL. IEEE, 01 October 2018, vol. 18, 8074-8084
- Marginal Association Probabilities for Multiple Extended Objects without Enumeration of Measurement Partitions. **SHISHAN YANG et al.** IEEE 23rd International Conference on Information Fusion (FUSION). 2022